# EUROPÄISCHE PATENTSCHRIFT

(11) **EP 3 339 018 B1**
(45) Veröffentlichungstag und Bekanntmachung des Hinweises auf die Patenterteilung: **06.05.2020**
(21) Anmeldenummer: 17203663.4
(22) Anmeldetag: 24.11.2017
(51) Int. Cl.: B32B 7/06, B32B 15/08, B32B 15/20, B32B 27/08, B32B 27/10, B32B 27/30, B32B 27/32, B32B 27/34, B32B 27/36, B32B 29/00, B32B 27/16, B65D 75/58

(54) **AUFREISSVERPACKUNG**
TEARABLE PACKAGE
EMBALLAGE AVEC BANDELETTE D'ARRACHAGE

(30) Priorität: 23.12.2016 DE 102016125669
(43) Veröffentlichungstag der Anmeldung: 27.06.2018
(73) Patentinhaber: Mondi AG, 1030 Wien (AT)
(72) Erfinder: NIEPELT, Ralf, 48599 GRONAU (DE)
(74) Vertreter: Andrejewski - Honke Patent- und Rechtsanwälte Partnerschaft mbB

(56) Entgegenhaltungen:
- EP-A1- 1 529 798
- EP-A1- 2 361 749
- EP-A1- 2 813 441
- EP-A1- 2 886 329
- EP-B1- 0 971 819
- US-A1- 2005 208 282

## Beschreibung

Die Erfindung betrifft eine Aufreißverpackung mit einem ersten Verpackungsmaterial und einem zweiten Verpackungsmaterial, die an einer auftrennbaren Siegelnaht miteinander verbunden sind, wobei an der auftrennbaren Siegelnaht eine Siegelschicht des ersten Verpackungsmaterials mit einer unmittelbar angrenzenden Substratschicht des zweiten Verpackungsmaterials verbunden ist, wobei die Substratschicht als Hauptbestandteil Aluminium Papier oder ein Polymer ausgewählt aus der Gruppe Polyethylenterephthalat (PET), Polystyrol (PS), Polyvinylchlorid (PVC), Polycarbonat (PC), Polylactid (PLA) und Polyamid (PA) aufweist, und wobei die Siegelschicht angrenzend an die Substratschicht eine durch ein physikalisches Oberflächenbehandlungsverfahren modifizierte Oberfläche aufweist.

Der Begriff Aufreißverpackung bezieht sich im Rahmen der vorliegenden Erfindung darauf, dass das erste Verpackungsmaterial an der auftrennbaren Siegelnaht von dem zweiten Verpackungsmaterial getrennt werden kann. In diesem Sinne wird beispielsweise ein Deckel als erstes Verpackungsmaterial von einer Kunststoffschale als zweitem Verpackungsmaterial abgerissen, wobei die beiden Verpackungsmaterialien selbst nicht zerrissen bzw. eingerissen werden. Je nach Ausgestaltung der Heißsiegelnaht kann lediglich die Siegelschicht in Richtung ihrer Dicke zerrissen werden, wenn die Materialtrennung innerhalb der Siegelschicht selbst erfolgt, so dass dann von einem Kohäsionsbruch bzw. einem Kohäsionspeel gesprochen wird. Grundsätzlich können die Materialien auch so ausgestaltet und ausgewählt sein, dass eine Materialtrennung genau an der Kontaktfläche zwischen Siegelschicht und Substratschicht erfolgt, so dass dann ein Adhäsionsbruch bzw. ein Adhäsionspeel vorliegt.

Zu den im Rahmen der Erfindung in Betracht kommenden physikalischen Oberflächenbehandlungsverfahren zählen eine Corona-Behandlung, ein Plasma-Verfahren sowie eine Flammbehandlung, insbesondere mit einer Gasflamme. Wie auch nachfolgend noch weiter erläutert wird, wird bei dem Corona-Verfahren mittels einer Elektrode ein Funkenregen auf die zu behandelnde Oberfläche gebracht. Ein Plasmaverfahren kann sowohl im Niederdruckbereich als auch bei Atmosphärendruck durch geeignete Anlagen erfolgen. Sämtliche physikalische Oberflächenbehandlungsverfahren bewirken eine gewisse Aktivierung der Oberfläche, welche üblicherweise auch mit einer deutlichen Erhöhung der Oberflächenspannung einhergeht. Besonders bevorzugt ist im Rahmen der Erfindung ein Corona-Verfahren.

Die vorliegende Erfindung beschäftigt sich mit einer Aufreißverpackung, die von einem ersten Verpackungsmaterial und einem zweiten Verpackungsmaterial gebildet ist. Insbesondere kann das zweite Verpackungsmaterial eine Kunststoffschale bilden, welche von dem ersten Verpackungsmaterial als Deckel verschlossen ist.

Derartige Aufreißverpackungen haben sich beispielsweise für die Aufnahme von Lebensmitteln, Medizinprodukten und dergleichen bewährt, wobei bei einer Ausgestaltung des zweiten Verpackungsmaterials als Kunststoffschale die verpackten Produkte während der Lagerung gut geschützt sind, einem Benutzer in hochwertiger Weise präsentiert werden und schließlich nach einem Öffnen der Aufreißverpackung leicht entnommen werden können.

Die auftrennbare Siegelnaht ist dabei so ausgestaltet, dass zunächst ein zuverlässiger Verschluss sichergestellt ist, wobei dann der Endverbraucher die Aufreißverpackung leicht öffnen kann. Üblicherweise ist das vorzugsweise als Schale ausgebildete zweite Verpackungsmaterial deutlich steifer als das erste Verpackungsmaterial, welches insbesondere als Folie bereitgestellt werden kann und bei einer Schale dann einen Deckel bildet. Um die auftrennbare Siegelnaht herum verbleibt üblicherweise noch ein freier, unverbundener Abschnitt zumindest des ersten Verpackungsmaterials, der von einem Benutzer angehoben werden kann. Wenn dann mit einer ausreichenden Kraft an dem ersten Verpackungsmaterial gezogen wird, so wird die auftrennbare Siegelnaht geöffnet, d.h. aufgepeelt. Entsprechend wird eine solche Verbindung auch als peelbare Heißsiegelnaht bezeichnet.

Es ergibt sich für einen Benutzer der Vorteil, dass für das Öffnen der Aufreißverpackung keine Messer, Scheren oder ähnliche Werkzeuge notwendig sind.

An eine auftrennbare Heißsiegelnaht werden unterschiedliche Anforderungen gestellt. Zunächst soll ein Aufreißen bzw. ein Aufpeelen mit einer angemessenen Kraft möglich sein. Dazu müssen die Siegelschicht des ersten Verpackungsmaterials und die angrenzende Substratschicht des zweiten Verpackungsmaterials überhaupt in einem ausreichenden Maße miteinander heißsiegelbar sein, um eine zuverlässige Verbindung zu erreichen.

Darüber hinaus soll gerade aber auch an der auftrennbaren Heißsiegelnaht wieder eine Schichttrennung möglich sein, weshalb die dort erzeugte Verbundfestigkeit nicht zu stark sein darf. Insbesondere muss sicher ausgeschlossen werden, dass anstelle eines Auftrennens der Siegelnaht das erste Verpackungsmaterial oder das zweite Verpackungsmaterial über seine gesamte Dicke einreißt. Des Weiteren wird auch eine leichte Aufreißbarkeit per Hand gefordert, auch wenn Kinder, ältere oder in ihrer Motorik eingeschränkte Benutzer die Aufreißverpackung öffnen.

Darüber hinaus soll eine möglichst gleichmäßige Festigkeit erzielt werden, so dass einerseits ein sicherer Verschluss gewährleistet ist und andererseits ein gleichmäßiger Aufreißvorgang ermöglicht wird.

Schließlich wird auch ein besonders gleichmäßiges Aufreißen auf einer mikroskopischen Skala gewünscht, um die Bildung von Bruchstücken, Fetzen oder zottenartig bzw. haarförmigen Vorsprüngen zu vermeiden.

Besonders bevorzugt ist an der aufgetrennten Siegelnaht ein sehr gleichmäßiges mattes Bruchbild vorhanden, welches auch als "Weißbruch" bezeichnet werden kann. Aus Sicht eines Benutzers ist dann der Bereich der aufgetrennten Siegelnaht klar zu erkennen. Insbesondere wird einem Benutzer auch durch eine erkennbar durchgehende aufgetrennte Siegelnaht angezeigt, dass zuvor ein vollständiger, sicherer Verschluss vorhanden war.

Des Weiteren wird bei gattungsgemäßen Aufreißverpackungen häufig während des Aufreißens ein deutlich wahrnehmbares, im weitesten Sinne knisterndes Geräusch wahrgenommen, was Benutzer häufig als unangenehm und störend empfinden. Entsprechend wird also auch eine möglichst geringe Geräuschentwicklung bei einem Öffnen der Aufreißverpackung durch ein Auftrennen der Siegelnaht angestrebt. Bei dem Aufreißen wird auch ein gleichmäßiges Trennverhalten verlangt, weil ungleichmäßige, schwankende Öffnungskräfte aus Sicht des Benutzers zu einem unangenehmen "Rattern" führen können, was sich sowohl negativ auf das Bruchbild als auch auf die Geräuschentwicklung auswirken kann.

Wie bereits zuvor erläutert, müssen die Siegelschicht des ersten Verpackungsmaterials und die Substratschicht des zweiten Verpackungsmaterials so ausgewählt sein, dass diese gerade eine peelbare Verbindung ermöglichen, was selbstverständlich von der jeweiligen Materialpaarung abhängt. Wenn sowohl die Siegelschicht als auch die Substratschicht aus Polyethylen (PE) gebildet sind, können bei einer solchen klassischen Ausgestaltung die oben genannten Vorgaben durch geeignete Beimischungen erreicht werden. Bei anderen Materialkombinationen resultiert jedoch häufig eine unzureichende Verbindung, welche keinen zuverlässigen Verschluss ermöglicht, oder eine zu feste Verbindung, welche die gewünschte Materialtrennung an der Siegelnaht nicht ermöglicht.

Es besteht in der Praxis vor diesem Hintergrund ein sehr großes Bedürfnis, ein erstes Verpackungsmaterial anzugeben, welches mit seiner Siegelschicht gegen unterschiedliche Substratschichten peelbar versiegelt werden kann.

Eine gattungsgemäße Aufreißverpackung ist aus der EP 1 453 671 B1 bekannt, wobei eine coextrudierte Verpackungsfolie als erstes Verpackungsmaterial angegeben wird, welche gegen unterschiedliche Materialien einer Substratschicht peelbar gesiegelt werden kann. Um ein universelles Aufreißen gegenüber unterschiedlichen Fügepartnern zu ermöglichen, wird ausgehend von Polyethylen als Hauptbestandteil ein Blend vorgeschlagen, der Polystyrol sowie elastisches Styrol-Butadien-Styrol-Blockcopolymer enthält. Es ergibt sich eine relativ aufwändige und kostenintensive Formulierung der Siegelschicht.

Aus EP 2 886 329 A1 ist eine Aufreißverpackung mit einer Schale als zweitem Verpackungsmaterial bekannt, wobei die einer Deckfolie zugewandte Seite der Schale aus Polyester gebildet ist. Bezüglich dieses speziellen Fügepartners weist die Deckfolie als erstes Verpackungsmaterial Polyethylen mit einer Dichte von weniger als 0,92 g/cm³ auf, wobei ein durch Metallocen-Katalyse hergestelltes lineares Polyethylen niedriger Dichte (PE-LLDm) besonders geeignet ist. Bezogen auf die konkret genannte Materialzusammenstellung ist vorgesehen, dass die der Schale zugewandten Seite der Deckfolie durch Corona-Behandlung modifiziert ist.

EP 0 971 819 B1 offenbart Heißsiegeln einer Folie auf Basis eines Polyethylen und/oder Propylen Copolymers mit einem Substrat aus z. B. aus Papier oder einem Nonwoven. Da eine solche Materialkombination durch Heißsiegeln zu einer äußerst festen und nahezu unpeelbaren Verbindung führt wird vorgeschlagen, die Peelbarkeit durch Zugabe von Polybuten zu verbessern.

Vor diesem Hintergrund liegt der vorliegenden Aufgabe zugrunde, eine flexibel einzusetzende Aufreißverpackung mit einer auftrennbaren Siegelnaht anzugeben, wobei trotz einer einfachen und kostengünstigen Materialzusammenstellung besonders vorteilhafte Eigenschaften der auftrennbaren Siegelnaht erreicht werden.

Gegenstand der Erfindung ist eine Aufreißverpackung gemäß Patentanspruch 1.

Ausgehend von der eingangs beschriebenen Aufreißverpackung ist demnach erfindungsgemäß vorgesehen, dass die polymeren Bestandteile der Siegelschicht einen Blend mit 2 bis 25 Gew.-% Polybuten, 60 bis 98 Gew.-% Polyethylen und weniger als 20 Gew.-% Rest bilden. Überraschenderweise kann mit einem solchen Blend gegenüber unterschiedlichen, insbesondere polaren, polymeren Materialien und zusätzlich auch Aluminum sowie Papier eine gut auftrennbare Siegelnaht gebildet werden, wenn die Siegelschicht an ihrer an die Substratschicht angrenzenden Seite eine durch ein physikalisches Oberflächenbehandlungsverfahren, insbesondere durch Corona-Behandlung, modifizierte Oberfläche aufweist. Als Rest können übliche Verarbeitungshilfsmittel und Additive vorgesehen sein. Der Anteil des Rests beträgt insbesondere weniger als 5 Gew.-%, bevorzugt zwischen 0 und 2 Gew.-%.

Die angegebenen Gew.-% beziehen sich auf sämtliche polymeren Bestandteile der Siegelschicht, wobei diese einen polymeren Blend bilden. Darüber hinaus können grundsätzlich auch nicht polymere Bestandteile wie Füll- und Farbstoffe vorhanden sein. Vorzugsweise ist der Anteil der polymeren Bestandteile zu den nicht polymeren Bestandteilen 1:1, besonders bevorzugt zumindest 2:1, wobei auch auf nicht polymere Bestandteile vollständig verzichtet werden kann.

Besonders bevorzugt weist der die polymeren Bestandteile der Siegelschicht bildende Blend 2 bis 20 Gew.-% Polybuten, 75 bis 98 Gew.-% Polyethylen und weniger als 10 Gew.-% Rest auf. Die polymeren Bestandteile der Siegelschicht können aus 4 bis 10 Gew.-% Polybuten (PB), 0 bis 10 Gew.-% mit Maleinsäureanhydrid gepropftem Polyethylen (PE-MAH) und 80 bis 94 Gew.-% Polyethylen niedriger Dichte (PE-LD) bestehen.

Durch die Corona-Behandlung wird die Luft oberhalb der Folienoberfläche ionisiert, wobei ionisierte Moleküle der Luft mit Polymermolekülen der Folienoberfläche reagieren und wobei durch Anlagerung von Ionen und/oder eine teilweise Spaltung der Polymermoleküle polare Bereiche gebildet werden, was zu einer Erhöhung der Oberflächenspannung führt.

Die Oberflächenspannung kann beispielsweise gemäß ISO 15989 bestimmt werden. Insbesondere kann die Oberflächenspannung zwischen 38 und 48 mN/m (Millinewton pro Meter) betragen.

Um eine universelle Heißsiegelbarkeit gegenüber den Materialien Polyethylenterephthalat, Polystyrol, Polyvinylchlorid, Polycarbonat, Polylactid und Polyamid zu erreichen, ist jedoch alleine eine Modifikation der Oberfläche durch Corona-Behandlung nicht ausreichend. Vielmehr ist ein Anteil von 2 bis 20 Gew.-% Polybuten notwendig, um eine einerseits ausreichend feste und andererseits leicht auftrennbare Siegelnaht erzeugen zu können.

Schließlich zeigen Vergleichsbeispiele auch, dass die Bereitstellung des erfindungsgemäßen Blends ohne eine Modifizierung der Oberfläche durch Corona-Behandlung nicht zu den gewünschten Eigenschaften führt, wobei gerade die Kombination der verschiedenen Maßnahmen erfindungswesentlich ist.

Hauptbestandteil der Siegelschicht ist Polyethylen, insbesondere Polyethylen niedriger Dichte mit einem Anteil zwischen 60 und 98 Gew.-%., insbesondere zwischen 75 und 85 Gew.-% bezogen auf den Blend.

Für die Herstellung von Polyethylen sind verschiedene Verfahren bekannt, welche abhängig von den Parametern bei der Polymerisation als Hochdruckverfahren, Mitteldruckverfahren und Niederdruckverfahren bezeichnet werden. Darüber hinaus ist bekannt, Polyethylen mit Metallocen als Katalysator herzustellen, wobei entsprechende Polyethylen-Typen eine enge Molmassenverteilung aufweisen. Im Vergleich zu der Herstellung beispielsweise in einem klassischen Hochdruckverfahren ergeben sich für viele Anwendungsfälle verbesserte Materialeigenschaften, jedoch auch höhere Herstellungskosten.

Bei dem von dem Unternehmen ICI erstmals 1933 im technischen Maßstab durchgeführten Hochdruckverfahren erfolgt die Polymerisation üblicherweise bei einem Druck von 1000 bis 3000 bar sowie bei einer Temperatur zwischen 150 bis 250°C.

Abhängig von dem Herstellungsverfahren werden die Polyethylentypen auch unterschiedlich bezeichnet, wobei mit Metallocen hergestelltes Polyethylen an geeigneter Stelle durch die Hinzufügung des Buchstabens "m" bzw. "11" gekennzeichnet wird. Beispielsweise wird mit Metallocen hergestelltes, lineares Polyethylen niedriger Dichte als PE-LLDm bezeichnet.

Im Rahmen der Erfindung ist die Siegelschicht bevorzugt frei von Metallocen katalysiertem Polyethylen und weist vorzugsweise ausschließlich Polyethylen auf, welches in einem Hochdruckverfahren als Polyethylen niedriger Dichte (PE-LD) gewonnen ist. Ein solches in seiner Herstellung kostengünstiges Polyethylen ist nicht nur ausreichend, sondern auch hinsichtlich einer universeilen Siegelbarkeit gegenüber verschiedenen Materialien der Substratschicht von Vorteil, was möglicherweise auf die spezifische Modifikation der stark verzweigten Polyethylen-Moleküle durch die erfindungsgemäße physikalische Oberflächenbehandlung, insbesondere Corona-Behandlung zurückgeführt werden kann.

In an sich bekannter Weise bildet das zweite Verpackungsmaterial gemäß einer bevorzugten Ausgestaltung der Erfindung eine Kunststoffschale, welche von dem ersten Verpackungsmaterial als Deckel verschlossen ist. Eine solche Kunststoffschale kann beispielsweise aus einer geeigneten Folie tiefgezogen werden, wobei die Wanddicke einer solchen Schale zumindest im Bereich der Heißsiegelnaht zwischen 80 µm und 400 µm insbesondere zwischen 120 µm und 300 µm liegen kann.

Demnach ist die Kunststoffschale als zweites Verpackungsmaterial vergleichsweise steif im Vergleich zu dem Deckel als erstes Verpackungsmaterial, damit der Deckel leicht per Hand von der Kunststoffschale abgezogen werden kann. Das erste Verpackungsmaterial kann beispielsweise eine Dicke zwischen 30 und 200 µm, insbesondere zwischen 50 und 150 µm aufweisen.

Das erste Verpackungsmaterial mit der Siegelschicht kann dabei vollständig aus Kunststoff gebildet sein. Im Rahmen einer solchen Ausgestaltung ist des Weiteren bevorzugt, dass das erste Verpackungsmaterial transparent ist. Insbesondere der für die Siegelschicht vorgesehene Blend führt nicht zu einer Trübung des ersten Verpackungsmaterials, während bei einer aus dem Stand der Technik bekannten Ausgestaltung mit einem Anteil von Styrol-BlockCopolymer (EP 1 453 671 B1) eine Trübung vorhanden ist.

Das Verpackungsmaterial kann eine die Siegelschicht und zumindest eine weitere Folienschicht aufweisende Coextrusionsfolie umfassen. Das Verpackungsmaterial kann dann entweder vollständig von einer solchen Coextrusionsfolie gebildet sein oder zumindest eine weitere aufkaschierte Lage aufweisen.

Die vorliegende Erfindung ist jedoch nicht auf eine Ausgestaltung des ersten Verpackungsmaterials beschränkt, welche vollständig aus Kunststoff gebildet ist. Bei einer kaschierten Folie können beispielsweise auch separate oder aufgedampfte Metallschichten als Barriere vorgesehen sein. Schließlich kann die Siegelschicht auch auf einer Trägerschicht aus Papier angeordnet sein, wobei dann die Siegelschicht beispielsweise auf die Trägerschicht aus Papier aufextrudiert wird.

Die erfindungsgemäße Aufreißverpackung zeichnet sich auch durch vorteilhafte Eigenschaften der auftrennbaren Siegelnacht aus. Es ergibt sich ein sehr homogenes Aufreiß- bzw. Peelverhalten, welches in der Praxis auch als "smooth peel" bezeichnet wird.

Durch eine mikroskopische Weißfärbung, die auch als "Weißbruch" bezeichnet wird, bleibt die aufgetrennte Siegelnaht sichtbar, so dass der Benutzer einerseits sofort erkennen kann, dass die Aufreißverpackung bereits geöffnet ist. Andererseits kann sich ein Benutzer auch bei einem durchgehenden Verlauf der aufgetrennten Siegelnaht davon überzeugen, dass zuvor ein sicherer Verschluss gewährleistet war.

Schließlich wird im Rahmen der Erfindung bei einem Auftrennen der Siegelnaht auch eine besonders geringe Geräuschentwicklung erreicht.

Um die beschriebenen Vorteile zu unterstützen, ist die Siegelschicht zweckmäßigerweise dünn ausgeführt und weist beispielsweise eine Dicke zwischen 0,5 µm und 20 µm, insbesondere zwischen 2 µm und 10 µm auf. Durch eine geringe Dicke der Siegelschicht können einerseits Kosten eingespart werden. Andererseits wird bei einer dünnen Siegelschicht die Ebene, an der das Auftrennen der Siegelnaht erfolgt, genau festgelegt. Selbst wenn die Siegelschicht gerade zur Vermeidung einer Geräuschentwicklung relativ weich ist, kann durch eine geringe Dicke ein ungleichmäßiges Aufreißverhalten vermieden werden. Die Dicke der Siegelschicht beträgt vorzugsweise weniger als 5 µm, wobei eine weitere Reduzierung der Dicke unter Berücksichtigung der üblichen Fertigungsanlagen und Schichtdickenverhältnisse schwierig sein kann.

Der Polyethylenanteil der Siegelschicht als Hauptkomponente mit einem Anteil zwischen 60 bis 98 Gew.-% der polymeren Bestandteile der Siegelschicht weist vorzugsweise einen gemäß DIN ISO 1133 bei einer Temperatur von 190°C und einem Prüfgewicht von 2,16 kg bestimmten mittleren Flussindex (MFI) zwischen 4 und 10 g/10 min auf. Ein solcher vergleichsweise hoher Schmelzflussindex trägt zu einer besonders geringen Geräuschentwicklung bei einem Aufreißen sowie zu dem Erreichen der gewünschten Peelwerte bei.

Wie bereits zuvor erläutert, sind die polymeren Bestandteile der Siegelschicht zum größten Teil aus Polyethylen gebildet. Als eine Komponente des insgesamt mit 60 bis 98 Gew.-% vorhandenen Polyethylens kann auch ein mit Maleinsäureanhydrid gepropftes Polyethylen (PE-MAH) mit einem Anteil zwischen 0,5 Gew.-% und 10 Gew.-% bezogen auf den gesamten Blend vorhanden sein. Der Anteil kann beispielsweise bei 5 Gew.-% liegen. Es hat sich gezeigt, dass bei einer entsprechenden Zumischung von PE-MAH die Lagerfähigkeit des ersten Verpackungsmaterials vor einer Weiterverarbeitung und insbesondere einer Verbindung mit dem zweiten Verpackungsmaterial entlang der Siegelnaht erhöht werden kann.

Zur Messung der Siegelfestigkeit kann beispielsweise eine an die DIN 55529 angelehnte Prüfvorschrift verwendet werden, wobei Testabschnitte des ersten Verpackungsmaterials sowie des zweiten Verpackungsmaterials bereitgestellt und in einem Bereich von 150 x 5 mm durch eine Heißsiegelnaht miteinander verbunden werden. Es verbleibt dann ein ungesiegeltes freies Ende mit einer Länge von mindestens 20 mm. Die Testabschnitte werden in 95 x 15 mm große Stücke zerteilt, so dass die Heißsiegelnaht in etwa mittig entlang der Breite verläuft. Die freien Enden des zweiten Verpackungsmaterials werden auf einem Rad fixiert und ein freies Ende des ersten Verpackungsmaterials wird an einer Zugvorrichtung befestigt, wodurch das erste Verpackungsmaterial mit einer konstanten Geschwindigkeit von 200 mm pro Minute in einem Winkel von 90° abgezogen wird. Die Peelkraft wird durch Messung der Öffnungskraft beim Abziehen bestimmt und in Newton pro 15 mm entsprechend der Breite der ausgestanzten Probekörper angegeben.

Im Rahmen der Erfindung soll eine Peelkraft zwischen 2 und 15 Newton pro 15 mm Probebreite erreicht werden. Vorzugsweise wird der angegebene Bereich der Peelkraft bei sämtlichen Substratschichten Polyethylenterephthalat (PET, insbesondere amorphes Polyethylenterephthalat APET), Polystyrol (PS), Polyvinylchlorid (PVC), Polycarbonat (PC), Polylactid (PLA) und Polyamid (PA) erreicht, wobei vorzugsweise auch über einen Bereich der Siegeltemperatur von 130°C bis 170°C gleichmäßige Eigenschaften oder zumindest eine Peelkraft innerhalb des angegebenen Parameterbereichs erreicht wird.

Besonders bevorzugt liegt die Peelkraft zwischen 5 und 10 Newton pro 15 mm Probenbreite.

Im Rahmen der Erfindung erfolgt die Corona-Behandlung zur Modifizierung der Oberfläche der Siegelschicht üblicherweise derart, dass eine Oberflächenspannung von zumindest 38 mN/m erreicht wird. Besonders bevorzugt ist eine Oberflächenspannung zwischen 44 und 48 mN/m.

Die physikalische Oberflächenbehandlung, insbesondere Corona-Behandlung erfolgt vorzugsweise unmittelbar nach der Bildung der Siegelschicht durch Extrusion, unabhängig davon, ob die Siegelschicht als Monofolie, als eine außenliegende Schicht einer Coextrusionsfolie oder als eine aufextrudierte Beschichtung auf einer Trägerschicht aus Papier gebildet wird. Es wird angenommen, dass nach der Erzeugung der Siegelschicht durch Extrusion über einen längeren Zeitraum niedermolekulare, flüchtige Bestandteile an die Oberfläche migrieren, welche die Wirksamkeit der Corona-Behandlung beeinträchtigen können. Vorzugsweise erfolgt die Corona-Behandlung also bei der Herstellung des ersten Verpackungsmaterials vor einer Weiterverarbeitung und insbesondere auch vor einem Aufwickeln des ersten Verpackungsmaterials.

Die Erfindung wird im Folgenden anhand einer lediglich ein Ausführungsbeispiel darstellenden Zeichnung näher erläutert. Es zeigen:
- Fig. 1: eine Aufreißverpackung mit einem ersten Verpackungsmaterial und einem zweiten Verpackungsmaterial in einem geschlossenen Zustand,
- Fig. 2: die teilweise geöffnete Aufreißverpackung gemäß der Fig. 1.

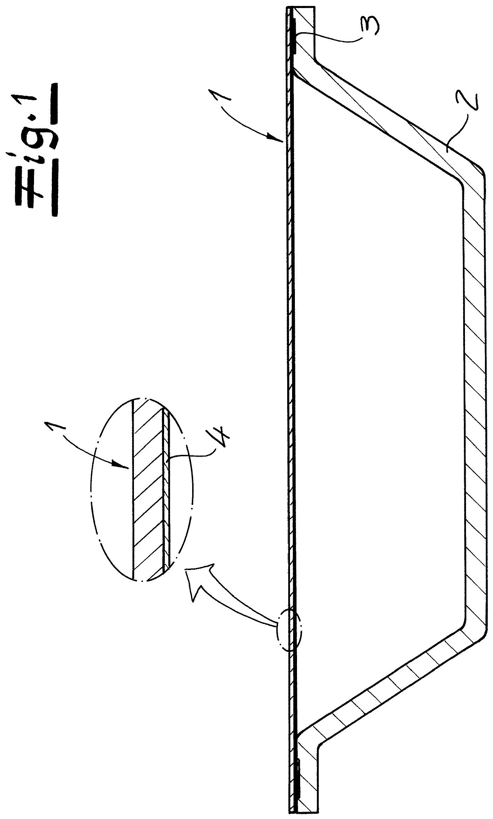

Die Fig. 1 zeigt eine Aufreißverpackung mit einem ersten Verpackungsmaterial 1 und einem zweiten Verpackungsmaterial 2, die an einer auftrennbaren Siegelnaht 3 miteinander verbunden sind. Gemäß einem vergrößerten Ausschnitt ist das erste Verpackungsmaterial 1 mehrschichtig ausgebildet und umfasst eine Siegelschicht 4, welche an das zweite Verpackungsmaterial 2 angrenzt und über die Siegelnaht 3 mit dem zweiten Verpackungsmaterial 2 verbunden ist.

In dem dargestellten Ausführungsbeispiel ist das zweite Verpackungsmaterial 2 in Form einer Schale einschichtig dargestellt, wobei also das zweite Verpackungsmaterial 2 vollständig von einer Substratschicht gebildet ist. Bei einer mehrschichtigen Ausgestaltung des zweiten Verpackungsmaterials 2 grenzt die Substratschicht an die Siegelschicht 4 des ersten Verpackungsmaterials 1 an, wobei dann nach außen hin weitere Schichten vorgesehen sein können.

Während das zweite Verpackungsmaterial 2 eine Kunststoffschale bildet, ist das erste Verpackungsmaterial 1 als Deckel vorgesehen. Das im Vergleich zu dem zweiten Verpackungsmaterial 2 dünne erste Verpackungsmaterial 1 kann von Hand geöffnet werden, wobei dann die auftrennbare Siegelnaht 3 geöffnet wird. Zu diesem Zweck erstreckt sich das erste Verpackungsmaterial 1 über die Siegelnaht 3 hinaus, so dass der äußere Rand des ersten Verpackungsmaterials 1 von einem Benutzer leicht gegriffen werden kann.

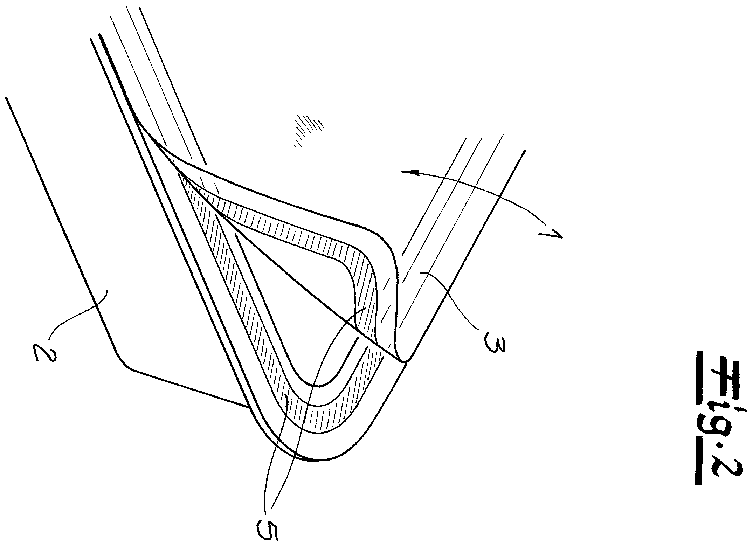

Die Fig. 2 zeigt in einer perspektivischen Darstellung die Aufreißverpackung gemäß der Fig. 1 in einem teilweise geöffneten Zustand. Es ist zu erkennen, dass das in dem Ausführungsbeispiel vollständig als Coextrusionsfolie gebildete erste Verpackungsmaterial 1 transparent ist. An dem aufgetrennten Bereich 5 der Siegelnaht 3 ergibt sich an dem ersten Verpackungsmaterial 1 und/oder an dem zweiten Verpackungsmaterial 2 eine gleichmäßige Weißfärbung, die auch als "Weißbruch" bezeichnet werden kann. Der beschriebene Weißbruch, d.h. die entsprechende Einfärbung kann gleichmäßig sowohl an dem ersten Verpackungsmaterial als auch an dem zweiten Verpackungsmaterial auftreten. Je nach Fügepartner ist eine solche Weißfärbung häufig aber auch unterschiedlich stark ausgeprägt. Beispielsweise wird zum Teil beobachtet, dass eine Weißfärbung nur an der Siegelschicht 4 vorhanden ist, wobei dann weniger Material der Siegelschicht auf der Substratschicht des zweiten Verpackungsmaterials 2 zurückbleibt.

Ein Benutzer erkennt also einerseits, dass die Aufreißverpackung dort geöffnet ist. Darüber hinaus ist anhand es durchgehenden Verlaufes des aufgetrennten Bereiches 5 ersichtlich, dass zuvor ein sicherer, vollständiger Verschluss gewährleistet war.

Die Substratschicht des zweiten Verpackungsmaterials 2 weist als Hauptbestandteil ein Polymer ausgewählt aus der Gruppe Polyethylenterephthalat, Polystyrol, Polyvinylchlorid, Polycarbonat, Polylactid und Polyamid auf. Die an die Substratschicht angrenzende Siegelschicht 4 besteht aus einem Blend mit 2 bis 20 Gew.-% Polybuten, 75 bis 98 Gew.-% Polyethylen und weniger als 10 Gew.-% Rest. Des Weiteren ist die Siegelschicht 4 an ihrer an die Substratschicht, d.h. das zweite Verpackungsmaterial 2 angrenzenden Seite oberflächlich durch eine Corona-Behandlung modifiziert, wodurch auch die Oberflächenspannung einen Wert zwischen 38 und 48 mN/m aufweist.

Das erste Verpackungsmaterial ist in dem dargestellten Ausführungsbeispiel vollständig als Coextrusionsfolie gebildet. Grundsätzlich ist aber auch ein Kaschierverbund geeignet. Rein exemplarisch kann beispielsweise eine Dekorfolie auf der Basis von orientiertem Polypropylen mit einem Aufdruck versehen werden und dann mit einer Coextrusionsfolie kaschiert werden, welche die Siegelschicht umfasst. Es ergibt sich beispielsweise folgender Aufbau:
12 µm OPET / Aufdruck // 2K-PU Kaschierklebstoff // 10 µm LDPE + LLDPE / 30 µm LDPE + LLDPE /10 µm Siegelschicht.

Die Siegelschicht 4 ist wie zuvor ausgeführt und besteht aus einer Mischung von Polyethylen und Polybuten, wobei die Oberfläche durch Corona-Behandlung modifiziert ist. Die Siegelschicht ist zusammen mit zwei weiteren Schichten auf der Basis von Polyethylen coextrudiert und mit der bedruckten Dekorfolie auf der Basis von orientiertem Polyethylenterephthalat kaschiert.

## Patentansprüche

1. Aufreißverpackung mit einem ersten Verpackungsmaterial (1) und einem zweiten Verpackungsmaterial (2), die an einer auftrennbaren Siegelnaht (3) miteinander verbunden sind, wobei an der auftrennbaren Siegelnaht (3) eine Siegelschicht (4) des ersten Verpackungsmaterials (1) mit einer unmittelbar angrenzenden Substratschicht des zweiten Verpackungsmaterials (2) verbunden ist, wobei die Substratschicht als Hauptbestandteil Aluminium, Papier oder ein Polymer ausgewählt aus der Gruppe Polyethylenterephthalat (PET), Polystyrol (PS), Polyvenylchlorid (PVC), Polycarbonat (PC), Polylactid (PLA) und Polyamid (PA) aufweist, und wobei die Siegelschicht (4) angrenzend an die Substratschicht eine durch ein physikalisches Oberflächenbehandlungsverfahren modifizierte Oberfläche aufweist, **dadurch gekenn-zeichnet**, dass die polymeren Bestandteile der Siegelschicht (4) einen Blend mit 2 bis 25 Gew.-% Polybuten (PB), 60 bis 98 Gew.-% Polyethylen und weniger als 20 Gew.-% Rest bildet.

2. Aufreißverpackung nach Anspruch 1, **dadurch gekennzeichnet, dass** die Siegelschicht (4) frei von Metallocen-katalysiertem Polyethylen ist.

3. Aufreißverpackung nach Anspruch 1 oder 2, **dadurch gekennzeichnet, dass** das zweite Verpackungsmaterial (2) eine Kunststoffschale bildet, welche von dem ersten Verpackungsmaterial (1) als Deckel verschlossen ist.

4. Aufreißverpackung nach einem der Ansprüche 1 bis 3, **dadurch gekennzeichnet, dass** die Siegelschicht (4) eine Dicke zwischen 0,5 µm und 20 µm aufweist.

5. Aufreißverpackung nach einem der Ansprüche 1 bis 4, **dadurch gekennzeichnet, dass** die Siegelschicht (4) an der durch das physikalische Oberflächenbehandlungsverfahren modifizierten Oberfläche eine Oberflächenspannung zwischen 38 und 48 mN/m aufweist.

6. Aufreißverpackung nach einem der Ansprüche 1 bis 5, **dadurch gekennzeichnet, dass** polymeren Bestandteile der die Siegelschicht (4) mit Maleinsäureanhydrid gepropftes Polyethylen (PE-MAH) mit einem Anteil zwischen 0,5 Gew.-% und 10 Gew.-% aufweisen.

7. Aufreißverpackung nach einem der Ansprüche 1 bis 6, **dadurch gekennzeichnet, dass** der Polyethylenanteil der Siegelschicht (4) einen gemäß DIN EN ISO 1133 bei einer Temperatur von 190°C und einem Prüfgewicht von 2,16 kg bestimmten mittleren Flussindex (MFI) zwischen 4 und 10 g/10min aufweist.

8. Aufreißverpackung nach einem der Ansprüche 1 bis 7, **dadurch gekennzeichnet, dass** das erste Verpackungsmaterial (1) eine die Siegelschicht (4) und zumindest eine weitere Folienschicht aufweisende Coextrusionsfolie umfasst.

9. Aufreißverpackung nach einem der Ansprüche 1 bis 8, **dadurch gekennzeichnet, dass** das erste Verpackungsmaterial (1) transparent ist.

10. Aufreißverpackung nach einem der Ansprüche 1 bis 7, **dadurch gekennzeichnet, dass** die Siegelschicht (4) auf einer Trägerschicht aus Papier angeordnet ist.

11. Aufreißverpackung nach einem der Ansprüche 1 bis 10, **dadurch gekennzeichnet, dass** die polymeren Bestandteile der Siegelschicht (4) aus 4 bis 10 Gew.-% Polybuten (PB), 0 bis 10 Gew.-% mit Maleinsäureanhydrid gepropftem Polyethylen (PE-MAH) und 80 bis 94 Gew.-% Polyethylen niedriger Dichte (PE-LD) bestehen.

## Claims

1. Tear-off packaging comprising a first packaging material (1) and a second packaging material (2) which are interconnected at a separable sealing seam (3), wherein at the separable sealing seam (3) a sealing layer (4) of the first packaging material (1) is connected to a directly adjacent substrate layer of the second packaging material (2), wherein the substrate layer comprises as main component aluminium, paper or a polymer selected from the group polyethylene terephthalate (PET), polystyrene (PS), polyvinyl chloride (PVC), polycarbonate (PC), polylactide (PLA) and polyamide (PA) and wherein the sealing layer (4) has a surface modified by a physical surface treatment method adjacent to the substrate layer, **characterized in that** the polymeric components of the sealing layer (4) form a blend with 2 to 25 wt.% polybutene (PB), 60 to 98 wt.% polyethylene and less than 20 wt.% remainder.

2. Tear-off packaging according to claim 1, **characterized in that** the sealing layer (4) is free from metallocene-catalyzed polyethylene.

3. Tear-off packaging according to claim 1 or 2, **characterized in that** the second packaging material (2) forms a plastic shell which is closed by the first packaging material (1) as a lid.

4. Tear-off packaging according to one of claims 1 to 3, **characterized in that** the sealing layer (4) has a thickness between 0.5 µm and 20 µm.

5. Tear-off packaging according to one of claims 1 to 4, **characterized in that** the sealing layer (4) has a surface tension between 38 and 48 mN/m at the surface modified by the physical surface treatment method.

6. Tear-off packaging according to one of claims 1 to 5, **characterized in that** the polymeric components of the sealing layer (4) comprise polyethylene grafted with maleic acid anhydride (PE-MAH) with a fraction between 0.5 wt.% and 10 wt.%.

7. Tear-off packaging according to one of claims 1 to 6, **characterized in that** the polyethylene fraction of the sealing layer (4) has a melt flow index (MFI) determined in accordance with DIN EN ISO 1133 at a temperature of 190 °C and a test weight of 2.16 kg between 4 and 10 g/10 min.

8. Tear-off packaging according to one of claims 1 to 7, **characterized in that** the first packaging material (1) comprises a co-extruded film comprising the sealing layer (4) and at least one further film layer.

9. Tear-off packaging according to one of claims 1 to 8, **characterized in that** the first packaging material (1) is transparent.

10. Tear-off packaging according to one of claims 1 to 7, **characterized in that** the sealing layer (4) is arranged on a carrier layer of paper.

11. Tear-off packaging according to one of claims 1 to 10, **characterized in that** the polymeric components of the sealing layer (4) consist of 4 to 10 wt.% polybutylene (PB), 0 to 10 wt.% of polyethylene grafted with maleic acid anhydride (PE-MAH) and 80 to 94 wt.% of low-density polyethylene (PE-LD).

## Revendications

1. Emballage déchirable comprenant un premier matériau d'emballage (1) et un second matériau d'emballage (2) qui sont reliés entre eux à un cordon de soudure (3) séparable, dans lequel une couche de scellement (4) du premier matériau d'emballage (1) est reliée à une couche de substrat directement adjacente du second matériau d'emballage (2) contre le cordon de soudure (3) séparable, dans lequel la couche de substrat présente en tant que matériau principal de l'aluminium, du papier ou un polymère sélectionné parmi le groupe du polyéthylène téréphtalate (PET), du polystyrène (PS), du chlorure de polyvinyle (PVC), du polycarbonate (PC), du polylactide (PLA) et du polyamide (PA), et dans lequel la couche de scellement (4) présente, adjacente à la couche de substrat, une surface modifiée par un procédé de traitement de surface physique, **caractérisé en ce que** les composants polymère de la couche de scellement (4) forment un mélange avec 2 à 25 % en poids de polybutène (PB), 60 à 98 % en poids de polyéthylène et moins de 20 % en poids du reste.

2. Emballage déchirable selon la revendication 1, **caractérisé en ce que** la couche de scellement (4) est exempte de polyéthylène par catalyse métallocène.

3. Emballage déchirable selon la revendication 1 ou 2, **caractérisé en ce que** le second matériau d'emballage (2) forme une coque de plastique qui est fermée par le premier matériau d'emballage (1) en tant que couvercle.

4. Emballage déchirable selon l'une des revendications 1 à 3, **caractérisé en ce que** la couche de scellement (4) présente une épaisseur entre 0,5 µm et 20 µm.

5. Emballage déchirable selon l'une des revendications 1 à 4, **caractérisé en ce que** la couche de scellement (4) présente sur la surface modifiée par le procédé de traitement de surface physique, une tension surfacique entre 38 et 48 mN/m.

6. Emballage déchirable selon l'une des revendications 1 à 5, **caractérisé en ce que** des composantes polymères de la couche de scellement (4) présentent du polyéthylène greffé à l'anhydride maléique (PE-MAH) avec une teneur entre 0,5 % en poids et 10 % en poids.

7. Emballage déchirable selon l'une des revendications 1 à 6, **caractérisé en ce que** la teneur en polyéthylène de la couche de scellement (4) présente un indice de fluidité (MI) moyen entre 4 et 10 g/10min déterminé selon la norme DIN EN ISO 1133 à une température de 190°C et un poids de contrôle de 2,16 kg.

8. Emballage déchirable selon l'une des revendications 1 à 7, **caractérisé en ce que** le premier matériau d'emballage (1) comprend un film de coextrusion présentant la couche de scellement (4) et au moins une autre couche de film.

9. Emballage déchirable selon l'une des revendications 1 à 8, **caractérisé en ce que** le premier matériau d'emballage (1) est transparent.

10. Emballage déchirable selon l'une des revendications 1 à 7, **caractérisé en ce que** la couche de scellement (4) est agencée sur une couche porteuse en papier.

11. Emballage déchirable selon l'une des revendications 1 à 10, **caractérisé en ce que** les composantes polymère de la couche de scellement (4) sont composées de 4 à 10 % en poids de polybutène (PB), 0 à 10 % en poids de polyéthylène greffé anhydride maléique (PE-MAH) et 80 à 94 % en poids de polyéthylène de densité inférieure (PE-LD).
